# EUROPÄISCHE PATENTSCHRIFT

(11) **EP 2 379 915 B1**
(45) Veröffentlichungstag und Bekanntmachung des Hinweises auf die Patenterteilung: **07.01.2015**
(21) Anmeldenummer: 09752855.8
(22) Anmeldetag: 19.11.2009
(51) Int. Cl.: F16H 59/70, F16H 63/38

(54) **VORRICHTUNG ZUR LAGEERKENNUNG EINES BEWEGLICHEN SCHALTELEMENTS**
METHOD FOR DETECTING THE POSITION OF A MOBILE SWITCHING ELEMENT
DISPOSITIF DE DÉTECTION DE POSITION D'UN ÉLÉMENT D'ENCLENCHEMENT MOBILE

(30) Priorität: 19.12.2008 DE 102008064156
(43) Veröffentlichungstag der Anmeldung: 26.10.2011
(73) Patentinhaber: Schaeffler Technologies GmbH & Co. KG, 91074 Herzogenaurach (DE)
(72) Erfinder: MASSINI, Stanislav, 90579 Langenzenn (DE); NEHMEYER, Thomas, 90491Nürnberg (DE)
(86) Internationale Anmeldenummer: PCT/EP2009/065498
(87) Internationale Veröffentlichungsnummer: WO 2010/069704

(56) Entgegenhaltungen:
- EP-A1- 1 350 991
- EP-A2- 1 152 174
- DE-A1-102006 036 696
- DE-U1- 9 321 093
- DE-U1- 29 504 625

## Beschreibung

Die Erfindung betrifft eine Vorrichtung zur Lageerkennung eines beweglichen Schaltelements, insbesondere einer Schaltstange oder einer Schaltwelle eines Kraftfahrzeugwechselgetriebes. Das Schaltelement weist eine an oder auf ihr angeordnete Rastierung mit mindestens einer ersten Kontur auf. Die Rastierung besitzt mindestens eine Schaltposition auf einem obersten Niveau und mindestens eine Schaltposition auf einem untersten Niveau. Der Rastierung ist ein Sensortaster zugeordnet, der ein in einem Gehäuse hubbewegliches und federbelastetes Tastelement aufweist. Ebenso ist ein Sensor im Gehäuse vorgesehen, der die Stellung des hubbeweglichen Rastelements bestimmen und daraus eine Lageerkennung ermitteln kann. Das hubbewegliche und federbelastete Rastelement ist häufig eine bewegliche Kugel und wirkt mit der Kontur der Rastierung am Schaltelement zusammen.

### Hintergrund der Erfindung

Die Offenlegungsschrift DE 10 2006 036 696 A1 offenbart einen Sensortaster, der zur Bestimmung von Stellungen wenigstens eines Getriebebauteils dient. Die Sensortaster besitzt wenigstens eine Sensorik und einen Abtastbolzen, der hubbeweglich in einem Gehäuse gelagert ist. Dabei ist das auf dem Gehäuse tragende Ende des Abtastbolzens gegen wenigstens eine dem Getriebebauteil zugeordnete Ablaufbahn bzw. Rampe elastisch vorspannbar. Die Sensorik trägt mindestens einen Impulsgeber, der berührungslos die Stellung des Abtastbolzens und somit auch berührungslos die Schaltposition ermittelt.

DE 195 81 769 C1 offenbart eine Rampenkontur für eine Arretiereinrichtung. Die Arretiereinrichtung dient zur Lagefixierung eines beweglichen Schaltungs- oder Stellelements. Insbesondere finden diese Arretiereinrichtungen für eine Schaltung eines Getriebes Anwendung. Im Getriebegehäuse ist ein Arretierbolzen verschiebbar geführt, der an einer Stirnseite eine Rastkugel aufweist. Der Arretierbolzen ist durch eine Druckfeder vorgespannt. Durch diese mit der Druckfeder erfolgte Vorspannung des Arretierbolzens folgt somit die Rastkugel einer auf dem Schaltungs- bzw. Stellelement vorgesehen Kurve. Die Rastkugel liegt dabei an zwei Anlagepunkten an der kurvenförmig ausgebildeten Rampenkontur an. Die Rampenkontur ist dabei derart ausgebildet, dass der Anlagepunkt mit einem Wendepunkt der symmetrisch gestalteten Rampenkontur übereinstimmt.

Bei den genannten Vorrichtungen zur Lageerkennung eines beweglichen Schaltelements aus dem Stand der Technik ist es oft nicht möglich, eine Höhenkodierung auf einer Rastierung auszuprägen, die einerseits die gewünschten und vorgegebenen Schaltkräfte korrekt abbildet und andererseits für jeden Gang einen eindeutigen Messwert liefert. Somit ist es nicht möglich, die zu detektierenden Schaltstellungen einwandfrei zu erfassen. Die eindeutige Erfassung der Konturen wäre z. B. durch eine Erhöhung oder Änderung der Betätigungskontur möglich, was allerdings auch eine Änderung der Arretierkräfte und damit auch eine Änderung des Schaltkraftverlaufs bedingt. Der Schaltkraftverlauf wird jedoch kundenseitig vorgegeben und kann kaum verändert werden. Dies bedeutet, dass bei der Betätigung eines Getriebes mit Hilfe des Schaltungs- oder Stellelements dies möglichst ohne erhöhten Kraftaufwand möglich sein muss.

Ein anderes Problem ist, dass der Signalgeber in den meisten Fällen ein Magnet ist und sich seine Feldstärke über die Lebensdauer beispielsweise aufgrund von Schmutzanlagerungen aus Metall, Erschütterungen oder der hohen Getriebetemperaturen ändern kann. Dann müssen auch den einzelnen Gangstellungen neue Messwerte zugeordnet werden. Dies erfordert eine aufwändige und in regelmäßigen Abständen zu wiederholende Kalibrierung.

### Zusammenfassung der Erfindung

Der Erfindung liegt die Aufgabe zugrunde, eine Vorrichtung zur Lageerkennung eines beweglichen Schaltelements zu schaffen, bei dem die vorstehend genannten Nachteile beseitigt sind.

Die obige Aufgabe wird gelöst durch eine Vorrichtung zur Lageerkennung eines beweglichen Schaltelements nach Anspruch 1. Erfindungsgemäß sind den Schaltpositionen Neutralstellung und Rückwärtsgangstellung auf der Rastierung die höchste und niedrigste Schaltstellung bzw. niedrigste und höchste Schaltstellung zugeordnet. Die Schaltstellungen sind in der Regel als Raststufen ausgebildet und stellen ein bestimmtes radiales Höhenniveau dar, das die Feder des vorgespannten Tastelements beaufschlagt. Dabei ist es nicht erforderlich, dass das Tastelement gleichzeitig in den Raststufen verrastet.

Der Erfindung liegt die Überlegung zugrunde, dass einerseits eine sichere Erkennung des Rückwärtsgangs unabdingbar ist, um beispielsweise einen Rückfahrscheinwerfer zu schalten, andererseits die Neutralstellung ebenfalls sicher erkannt werden muss, um das Anlassen des Motors zu erlauben oder bei Doppelkupplungsgetrieben ein paralleles, Getriebe zerstörendes Schalten zweier Gänge auszuschließen. Die Erkennung der übrigen Gangstellungen ist demgegenüber nachrangig, da deren Fehldetektion meistens nicht derart sicherheitsrelevante Folgen hat.

Über die Getriebelebensdauer gesehen werden sich auch bei der erfindungsgemäßen Vorrichtung die vom Sensor detektierten Signalgrößen verändern. Dennoch ermöglicht die Erfindung eine sichere Detektion des Rückwärtsgangs und der Neutralgasse, da diesen die besonders einfach zu erkennenden Extremalstellungen auf der Rastierung zugeordnet sind, wie im folgenden erläutert wird: Ist der Signalgeber beispielsweise als ein hubbeweglich durch die Rastierung beaufschlagter Magnet ausgebildet, kann sich die absolute Feldstärke, die einer jeden Rastkontur zugeordnet ist, über die Lebensdauer ändern. Dennoch wird stets der höchste bzw. geringste Messwert beim Durchfahren der Neutralgasse erreicht, was durch einfachen relativen Vergleich der Signale der Schaltpositionen untereinander ermittelt werden kann. Für die Rückwärtsgangstellung gilt entsprechendes.

Bei der Signalauswertung fließt die Überlegung ein, dass das Schaltschema vorgegeben ist und somit die Neutralstellung zwangsweise beim Schalten von einer Gangstellung in eine andere durchfahren werden muss. Da die meisten Sensoren kontinuierliche Messwerte liefen, braucht bei der Auswertung lediglich auf ein lokales Signalminimum bzw. -maximum geachtet werden. Der Absolutmesswert spielt demnach keine Rolle, solange eindeutig erkennbar ist, dass ein Minimalwert bzw. Maximalwert beim Durchfahren erzeugt wird. Damit ist diese Lösung gegenüber einer Feldstärkeänderung des Magneten robust, da auf eine Messwertdifferenz abgestellt werden kann. Aus dem gleichen Grund ist bei einer relativen Verschiebung der Signalniveaus zueinander eine sichere Erkennung gewährleistet.

Für einige Anwendungen kann die Genauigkeit der Gangstellungserkennung für die Vorwärtsgänge vernachlässigt werden. Dann ist es nicht erforderlich, für diese absolute Messwerte zur Auswertung heranzuziehen. Die Beschränkung auf relative Messwerte erlaubt einen sehr einfachen Aufbau der Vorrichtung und gewährleistet eine sichere Erkennung ohne Wartungsmaßnahmen, zwischenzeitliche Eichungen oder aufwändige elektronische Signalbearbeitung.

Sollte es dennoch erforderlich sein, kann anstatt durch eine Eichung die Neutralstellung dadurch kalibriert werden, dass sie im Testbetrieb oder sogar im normalen Fahrbetrieb mehrfach durchlaufen wird und der detektierte Extremwert schaltlogikintern zum neuen Referenzwert erhoben wird.

In einer Ausgestaltung der Erfindung weisen die Raststufen für alle Vorwärtsgangstellungen das gleiche Niveau auf. Sie können damit nicht voneinander unterschieden werden. Eine Rastierung mit derartigen Raststufen ist besonders einfach herzustellen und lässt eine besonders einfache elektronische Auswertung zu, da nur drei Schaltpositionen unterschieden werden müssen.

Im Gegensatz dazu ist es ebenfalls möglich, dass jeder einzelnen Vorwärtsgangstellung ein separates Zwischenniveau als eine mittlere Schaltstellung zugeordnet ist, so dass jeder Gang aufgelöst werden kann. Aus Zuverlässigkeitsgründen ist der Abstand der Rastniveaus zum Rückwärtsgang groß im Vergleich zu den Rastniveaus der Vorwärtsgänge untereinander.

Die Neutralgasse liegt in einer Variante der Erfindung auf dem gleichen Niveau, d.h. ein Vorwählen der Gassen generiert keine Höhenänderung durch die Rastierung und somit auch keine Signaländerung. Dies ist auf der Rastierung durch eine Nut abgebildet. Alternativ können aus die einzelnen Stellungen innerhalb der Neutralgasse durch eine unterschiedliche Nuttiefe unterschieden werden. In diesem Fall sollte die Änderung der Nuttiefe klein sein gegenüber dem Hub zur nächsten Raststufe.

In einer Ausgestaltung der Erfindung ist das Tastelement als ein Rastelement ausgebildet. Der Sensortaster stellt somit eine Schaltarretierung dar und dient nicht nur zum Erfassen der Schaltpositionen, sondern auch zum gleichzeitigen Verrasten an der Rastierung, so dass der Gang sicher gehalten wird. Da ein derartiges Rastelement erheblichen Einfluss auf das Schaltgefühl hat, ist es vorzugsweise als eine Rastkugel ausgebildet, die wälzgelagert ist.

In einer anderen Variante der Erfindung sind das die sichere Rastposition vermittelnde Rastelement und der Sensortaster als zwei verschiedene Bauteile ausgebildet. In diesem Fall ist es vorteilhaft, sie gegen unterschiedliche Konturen vorzuspannen. Während die erste Kontur der ersten Rastierung für den Sensortaster allein so gewählt werden kann, dass eine sichere Gangerkennung ermöglicht wird, kann die zweite Kontur einer zweiten Rastierung so abgestimmt werden, dass ein optimaler Schaltkraftverlauf erzeugt wird.

Die Rastierung ist in der Regel aus Blech ausgebildet und mit dem Schaltelement form- oder stoffschlüssig verbunden. Dabei kann sie direkt auf dem Schaltelement befestigt sein oder aber auf einer das Schaltelement umschließenden Hülse. Das Schaltelement ist häufig eine zylindrische Schaltwelle oder eine Schaltschiene.

Die höchste Schaltposition muss nicht notwendigerweise den absolut höchsten Punkt auf der Rastkontur darstellen. So ist es denkbar, dass, um ein sicheres Einrasten zu ermöglichen, die Rastkontur zwischen der höchsten Schaltposition und der Neutralposition ein kleiner Absatz angeordnet ist, der das Rastelement im Fahrbetrieb in der höchsten Schaltposition hält. Es muss lediglich sichergestellt sein, dass die höchste Schaltposition sich eindeutig von den mittleren Schaltpositionen abhebt.

### Kurze Beschreibung der Zeichnungen

Die Erfindung wird nachfolgend anhand eines Ausführungsbeispiels näher erläutert. Es zeigen:
- Figur 1: schematisch eine Anordnung zur Lageerkennung eines beweglichen Schaltungs- oder Stellelements;
- Figur 2: schematisch ein Schaltschema mit unterschiedlichen Niveaus,
- Figur 3: eine perspektivische Ansicht einer Rastierung mit einem Schaltschema,
- Figur 4: einen vergrößerten Querschnitt der Rastierung nach Figur 3,
- Figur 5: eine Aufsicht auf eine weitere Rastierung.

### Detaillierte Beschreibung der Zeichnungen

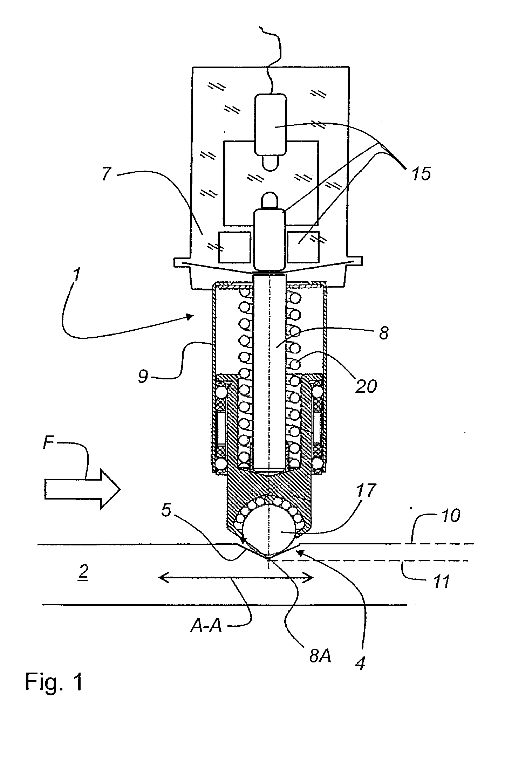

Figur 1 zeigt eine schematische Darstellung der Vorrichtung 1 zur Lageerkennung eines beweglichen Schaltungs- oder Stellelements 2. Das Schaltungs- oder Stellelement 2 bewegt sich entlang einer in Figur 1 mit dem Doppelpfeil A-A dargestellten Bewegungsrichtung. Das Schaltungs- oder Stellelement besitzt mindestens eine Rastierung 4, die eine entsprechende Kontur 5 ausgebildet hat. Dem Schaltungs- oder Stellelement ist die Vorrichtung 1 zur Lageerkennung des beweglichen Schaltungs- oder Stellelements 2 zugeordnet. Die Vorrichtung 1 besitzt ein hubbewegliches Tastelement 8, das an seinem vorderen Ende 8A eine Kugel 17 trägt. Diese Kugel 17 greift in entsprechender Weise in die Kontur 5 des Schaltungs- oder Stellelements 2 ein. Der Abtastbolzen 8 ist mit einer Feder 20 vorgespannt. Der Abtastbolzen 8 selbst bewegt sich innerhalb eines Gehäuses 9. Die Stellung des Abtastbolzens 8 wird mit einem Sensortaster 7 detektiert. Hierzu umfasst der Sensortaster 7 mehrere Sensoren 15. Die Kontur 5 der Rastierung 4 weist mindestens ein oberstes Niveau 10 und ein unterstes Niveau 11 auf.

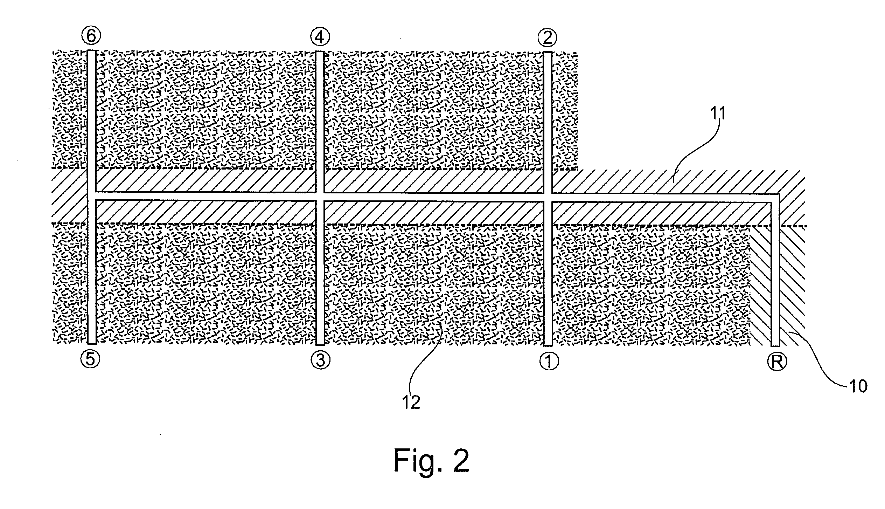

Figur 2 zeigt ein schematisches Schaltschema, wobei gleiche Höhen durch gleiche Schraffuren dargestellt sind. Der Rückwärtsgang stellt die höchste Schaltstellung 11 dar, und die Neutralgasse die niedrigste Schaltstellung 10. Alle weiteren Gänge werden durch die gleiche mittlere Schaltstellung 12 abgebildet.

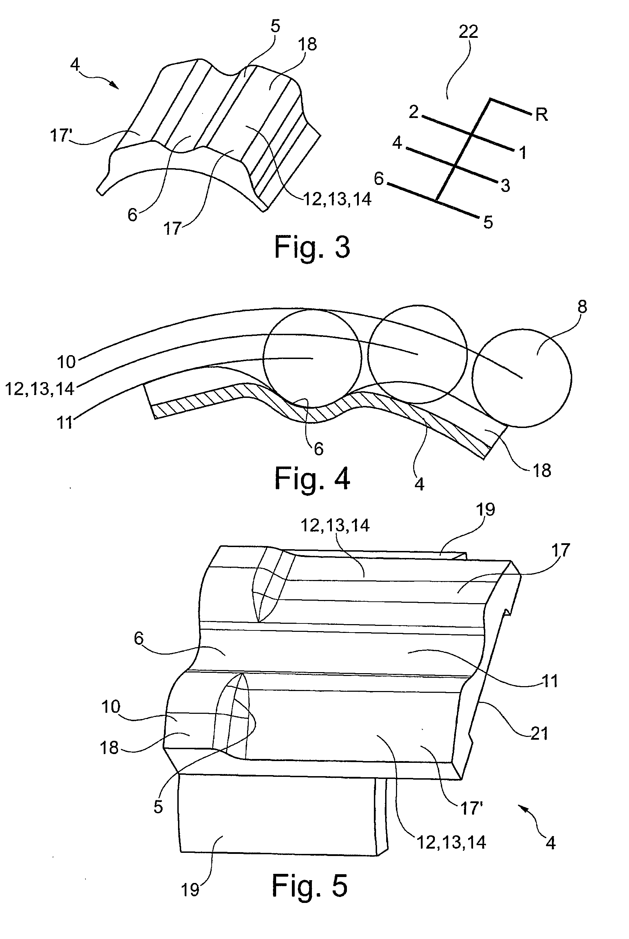

Figuren 3 und 4 zeigen ein Ausführungsbeispiel einer Rastierung 4, wobei das H-Schaltschema 22 zur Verdeutlichung der einzelnen Schaltstellungen dient. Die Rastierung 4 weist innenseitig eine Oberfläche auf, die an ein zylindrisches Schaltelement 2 angepasst ist. Die Oberfläche stellt einen Kreisringabschnitt dar und weist außenseitig die Kontur 5 in Form eines Rastgebirges auf. Axial mittig gesehen erstreckt sich eine Nut 6, wobei deren Nutgrund die radial tiefste Schaltposition 11 darstellt. Die radiale Höhe der Nut 6 bleibt über ihren axialen Verlauf konstant. Vorderseitig grenzen an die Nut 6 seitlich Plateaus 17, 17' an, die jeweils zylindrische Abschnitte bilden und denen die Vorwärtsgangstellungen als mittlere Schaltpositionen 12, 13, 14 zugeordnet sind. Wird beispielsweise gemäß dem Schaltschema von Figur 2 vom ersten Gang in den zweiten Gang geschaltet, so fährt das Tastelement von einer Schaltstellung 12 auf dem Plateau 17 über die Schaltstellung in der Neutralgasse 11 zur Schaltstellung 13 auf dem Plateau 17'. Rückseitig ist seitlich der Nut 6 eine Erhebung 18 angeordnet, die die höchste Schaltstellung 10 für den Rückwärtsgang bildet.

Zur genaueren Führung weist die Rastierung 4 nach Figur 5 außenseitig Flügel 19 zur sicheren Positionierung auf. Alternativ ist es innenseitig durch einen geraden Abschnitt 21 an eine Schaltschiene mit rechteckigem Querschnitt angepasst, so dass es für mehrere Schaltelemente verwendbar ist. Die Rastierung 4 ist aus Kunststoff ausgebildet.

### Bezugszahlenliste

- 1: Vorrichtung
- 2: Schaltelement
- 3: Schaltarretierung
- 4: erste Rastierung
- 5: erste Kontur
- 6: Nut
- 7: Sensortaster
- 8: Tastelement
- 8a: vorderes Ende
- 9: Gehäuse
- 10: oberste Schaltposition
- 11: unterste Schaltposition
- 12: mittlere Schaltposition
- 13: mittlere Schaltposition
- 14: mittlere Schaltposition
- 15: Sensor
- 16: Hülse
- 17: Plateau
- 18: Erhebung
- 19: Flügel
- 20: Feder
- 21: gerader Abschnitt
- 22: H-Schaltschema

## Patentansprüche

1. Vorrichtung (1) zur Lageerkennung eines in zumindest eine Neutralstellung, eine Rückwärtsgangstellung und eine Vorwärtsgangstellung beweglichen Schaltelements (2), das mindestens eine Rastierung (4) mit einer ersten Kontur (5) aufweist, die mindestens eine erste Schaltposition auf einem obersten Niveau (10) und mindestens eine zweite Schaltposition auf einem untersten Niveau (11) der Rastierung (4) aufweist, wobei der Rastierung (4) ein Sensortaster (7) zugeordnet ist, der ein in einem Gehäuse (9) hubbewegliches und federbelastetes Tastelement (8) aufweist, das mit der Rastierung (4) zusammenwirkt, und ein Sensor (15) im Gehäuse (9) vorgesehen ist, durch den die Stellung des Tastelements (8) oder eines durch das Tastelement beaufschlagbaren Bauteils bestimmbar und daraus eine Position des Schaltelements (2) erkennbar ist, **dadurch gekennzeichnet, dass** die Neutralstellung und die Rückwärtsgangstellung durch die extremalen Schaltpositionen (10, 11) bestimmt sind.

2. Vorrichtung nach Anspruch 1, **dadurch gekennzeichnet, dass** der Sensortaster (7) als eine Schaltarretierung (3) mit einer Sensorik ausgebildet ist, wobei das hubbewegliche und federbelastete Tastelement (8) als ein Rastelement ausgebildet ist, das mit der ersten Kontur (5) in mehreren Schaltpositionen (10, 11, 12) verrastbar ist.

3. Vorrichtung nach Anspruch 1, **dadurch gekennzeichnet, dass** der Sensortaster (7) als ein Abtastelement ausgebildet ist, das die erste Kontur (5) abfährt, ohne dass es in den Schaltpositionen (10, 11, 12, 13, 14) verrastet.

4. Vorrichtung nach Anspruch 1, **dadurch gekennzeichnet, dass** die niedrigste Raststufe (11) als Schaltposition für die Neutralgasse und die höchste Raststufe (10) als Schaltposition für den Rückwärtsgang ausgebildet sind.

5. Vorrichtung nach Anspruch 1, **dadurch gekennzeichnet, dass** die Kontur (5) eine oder mehrere Mittelpositionen (12) aufweist, die den Vorwärtsgangstellungen zugeordnet sind.

6. Vorrichtung nach Anspruch 5, **dadurch gekennzeichnet, dass** die Schaltpositionen für die Vorwärtsgangstellungen durch mehrere mittlere Raststufen (12, 13, 14) ausgebildet sind.

7. Vorrichtung nach Anspruch 5, **dadurch gekennzeichnet, dass** die Rastierung (4) im Längsschnitt gesehen einen Bereich (12) konstanter Konturhöhe für die Vorwärtsgangstellungen aufweist und endseitig einen weiteren Bereich (10) unterschiedlicher Höhe für die Rückwärtsgangstellung.

8. Vorrichtung nach Anspruch 1, **dadurch gekennzeichnet, dass** die Rastierung (4) im Wesentlichen die Form eines Kreisumfangssegments aufweist.

9. Vorrichtung nach Anspruch 1, **dadurch gekennzeichnet, dass** die Rastierung (4) eine Nut (6) konstanter Tiefe als Schaltstellung für die Neutralgasse aufweist.

## Claims

1. Device (1) for detecting the position of a switching element (2) which can be moved into at least one neutral position, one reverse gear speed position and one forward gear speed position and has at least one latching arrangement (4) with a first contour (5) which has at least a first switched position at a top level (10) and at least a second switched position at a bottom level (11) of the latching arrangement (4), wherein the latching arrangement (4) is assigned a sensor switch (7) which has a spring-loaded sensing element (8) which can move in a reciprocating fashion in a housing (9) and interacts with the latching arrangement (4), and a sensor (15) is provided in the housing (9), by means of which sensor (15) the position of the sensing element (8) or of a component that can be acted on by the sensing element can be determined and a position of the switching element (2) can be detected therefrom, **characterized in that** the neutral position and the reverse gear speed position are determined by means of the external switched positions (10, 11).

2. Device according to Claim 1, **characterized in that** the sensor switch (7) is embodied as a switching locking means (3) with a sensor system, where the spring-loaded sensing element (8) which can move in a reciprocating fashion is embodied as a latching element which can be latched with the first contour (5) in a plurality of switched positions (10, 11, 12).

3. Device according to Claim 1, **characterized in that** the sensor switch (7) is embodied as a sensor element which travels along the first contour (5) without latching into the switched positions (10, 11, 12, 13, 14).

4. Device according to Claim 1, **characterized in that** the lowest latching stage (11) is embodied as a switched position for the neutral slot, and the highest latching stage (10) is embodied as a switched position for the reverse gear speed.

5. Device according to Claim 1, **characterized in that** the contour (5) has one or more central positions (12) which are assigned to the forward gear speed positions.

6. Device according to Claim 5, **characterized in that** the switched positions for the forward gear speed positions are embodied by a plurality of central latching stages (12, 13, 14).

7. Device according to Claim 5, **characterized in that** the latching arrangement (4) has, when viewed in the longitudinal section, a region (12) with a constant contour height for the forward gear speed positions, and at the end it has a further region (10) with a different height for the reverse gear speed position.

8. Device according to Claim 1, **characterized in that** the latching arrangement (4) has essentially the shape of a circular circumferential segment.

9. Device according to Claim 1, **characterized in that** the latching arrangement (4) has a groove (6) with a constant depth as a switched position for the neutral slot.

## Revendications

1. Dispositif (1) de détection de la position d'un élément de sélection (2) qui peut être placé dans au moins une position neutre, une position de marche arrière et une position de marche avant et qui présente
au moins un encliquetage (4) doté d'un premier contour (5) qui présente au moins une première position de sélection sur un premier niveau supérieur (10) et au moins une deuxième position de sélection sur un niveau inférieur (11) de l'encliquetage (4),
un palpeur de capteur (7) qui présente un élément de palpage (8) qui est apte à être déplacé par poussée dans un boîtier (9), qui est sollicité par un ressort et qui coopère avec l'encliquetage (4) étant associé à l'encliquetage (4), et
un capteur (15) par lequel la position de l'élément de palpage (8) ou d'un composant apte à être sollicité par l'élément de palpage peut être déterminée et permettant de détecter la position de l'élément de commutation (2) étant prévu dans le boîtier (9), **caractérisé en ce que**
la position neutre et la position de marche arrière sont déterminées par les positions de sélection extrêmes (10, 11).

2. Dispositif selon la revendication 1, **caractérisé en ce que** le palpeur (7) du capteur est configuré comme blocage de sélection (3) doté d'un ensemble de capteurs, l'élément de palpage (8) apte à être déplacé par poussée et sollicité par ressort étant configuré comme élément d'encliquetage apte à être encliqueté sur le premier contour (5) en plusieurs positions de sélection (10, 11, 12).

3. Dispositif selon la revendication 1, **caractérisé en ce que** le palpeur (7) du capteur est configuré comme élément de palpage qui suit le premier contour (5) sans s'encliqueter dans les positions de sélection (10, 11, 12, 13, 14).

4. Dispositif selon la revendication 1, **caractérisé en ce que** l'étage d'encliquetage le plus bas (11) est configuré comme position de sélection du point neutre et l'étage d'encliquetage (10) le plus haut comme position de sélection de la marche arrière.

5. Dispositif selon la revendication 1, **caractérisé en ce que** le contour (5) présente une ou plusieurs positions médianes (12) associées aux positions de marche avant.

6. Dispositif selon la revendication 5, **caractérisé en ce que** les positions de sélection de marche avant sont formées par plusieurs étages médians d'encliquetage (12, 13, 14).

7. Dispositif selon la revendication 5, **caractérisé en ce que** l'encliquetage (4) présente en coupe longitudinale une partie (12) dont le contour a une hauteur constante pour les positions de marche avant et présente en position extrême une autre partie (10) de hauteur différente pour la position de marche arrière.

8. Dispositif selon la revendication 1, **caractérisé en ce que** l'encliquetage (4) présente essentiellement la forme d'un segment de circonférence.

9. Dispositif selon la revendication 1, **caractérisé en ce que** l'encliquetage (4) présente une rainure (6) de profondeur constante comme position de sélection du point neutre.
